# EUROPEAN PATENT APPLICATION

(11) **EP 3 984 367 A1**
(43) Date of publication of application: **20.04.2022**
(21) Application number: 21184385.9
(22) Date of filing: 07.07.2021
(51) Int. Cl.: A21B 3/13

(54) **BREAD BAKING MOLD**

(30) Priority: 18.05.2021 CN 202110540494
(71) Applicant: Chefmade Household Products Co., Ltd, Foshan City, Guangdong Province (CN)
(72) Inventor: Chan, Eric, Foshan City (CN)
(74) Representative: Lin Chien, Mon-Yin

(57) **Abstract**

The present disclosure relates to a bread baking mold (100) including a frame (20), a cover plate (10) provided at the top (21) of the frame, a bottom plate (40) provided at the bottom (22) of the frame, and at least a container (30) provided in the frame (20). Wherein the cover plate (10) and the bottom plate (40) can opening and/or closing relative to the frame (20) respectively. When it is necessary to produce toasts of various sizes and shapes, it only needs to replace the container, and there is no need to repurchase a complete set of mold, which can effectively reduce the use cost. The container is convenient to be replaced and can be selected according to the amount of raw material to be produced, which can effectively reduce material waste. The cover plate (10) and the bottom plate (40) are detachable after use.

## Description

### TECHNICAL FIELD

The present disclosure relates to the field of food processing mold, and in particular, to a bread baking mold.

### BACKGROUND

Bread is a food made from grain (usually wheat) by grinding and heating. To be specific, bread is a baked food made from wheat flour as main raw material, from yeast, eggs, oil, sugar, salt, etc. as auxiliary materials. Water is added into these materials to prepare dough, then performing processes of dividing, forming, proofing, baking, and cooling to the dough to obtain bread. Toast bread products are easy to carry, easy to eat and good in taste, which have become a common food in people's life. When baking toast, the prepared dough needs to be placed in a toast mold for the purpose of qualitative the toast. The shape of the mold determines the final shape of the toast.

However, the toast mold in the prior art has a disadvantage of poor flexibility. Each toast mold has a fixed toast groove for containing raw materials, thus each toast groove matches a toast mold. If it is necessary to produce toasts of various sizes and shapes, a large number of different toast molds need to be repurchased, which is costly. And a toast mold with large size is not easy to be stored, resulting in space waste. At the same time, for the general family, amount calculation of raw material is not accurate, leading to time and material waste.

In addition, the toast mold needs to be cleaned up every time after use. Most of the toast molds in the prior art are inconvenient to clean, and it is easy to leave bread crumbs in some corners, resulting in a poor hygiene situation.

Therefore, in view of the above aspects, it is necessary to make reasonable improvements to the prior art.

### SUMMARY

In view of the defects existing in the prior art, the present disclosure aims at providing a bread baking mold, supported by a frame with a top plate and a bottom plate, which are used to form a flat surface with one or more different shaped containers placed in the middle of the frame to obtain the toast with ideal shape for consumers.

In order to realize the above purpose, the present disclosure adopts the following technical scheme:
A bread baking mold comprising a frame, a cover plate provided at the top of the frame, a bottom plate provided at the bottom of the frame, and at least a container provided in the frame. Wherein the cover plate and the bottom plate can opening and/or closing relative to the frame respectively.

Further, the container can be a polyhedron or a cylinder or an irregular body.

Preferably, the container is a cylindrical body.

Further, the container is integrally formed with a hollow.

Further, the container has a first opening connected with the cover plate and a second opening connected with the bottom plate.

Further, the frame can be a polyhedron or a cylinder or an irregular body.

In order to realize the above purpose, the present disclosure adopts the further following technical scheme:
The bread baking mold described above has a cover plate and/or a bottom plate removably arranged at the top and/or bottom of the frame.

In order to realize the above purpose, the present disclosure adopts the further following technical scheme:
In the bread baking mold described above, the cover plate and the bottom plate are opening and/or closing relative to the top of the frame and bottom of the frame slidably.

Further, the frame can be rectangular in shape.

Further, the cover plate comprising a first plane with two opposite sides extending inwardly resulting in a first slide groove and a second slide groove; a third side between the two opposite sides extending inwardly resulting in a first shift groove; and a fourth side opposite the third side turning outwardly resulting in a first holding portion.

Further, the bottom plate comprising a second plane with two opposite sides extending inwardly resulting in a third slide groove and a fourth slide groove; a third side between the two opposite sides extending inwardly resulting in a second shift groove; and a fourth side opposite the third side turning outwardly resulting in a second holding portion.

### BRIEF DESCRIPTION OF THE DRAWINGS

Fig.1 is a schematic structural diagram of the bread baking mold according to an embodiment of the present disclosure.
Fig.2 is a schematic structural diagram of the frame of the bread baking mold according to an embodiment of the present disclosure.
Fig.3 is a schematic structural diagram of the cover plate of the bread baking mold according to an embodiment of the present disclosure.
Fig.4 is a schematic structural diagram of the bottom plate of the bread baking mold according to an embodiment of the present disclosure.
Fig.5 is a schematic structural diagram of the container of the bread baking mold according to an embodiment of the present disclosure.

### DETAILED DESCRIPTION

The technical schemes in the embodiments of the present disclosure will be clearly and completely described as below with reference to the accompanying drawings 1-5.

In this embodiment, it should be understood that the terms indicating orientation or positional relationship such as "middle", "upper", "lower", "top", "right", "end", "front", "back", "central" are based on the orientation or positional relationship shown in the drawings, which is only for the convenience of describing, and does not indicate or imply that the described device or element must have a specific orientation, be constructed and performed in a specific orientation, therefore, it does not mean to limit the present disclosure.

In addition, if the connection or fixing method between the components is not specifically described in this specific embodiment, the connection or fixing method can be fixed by bolts or pins, or pin shaft connections, etc., which are commonly used in the prior art. Therefore, it will not be described in detail in this embodiment.

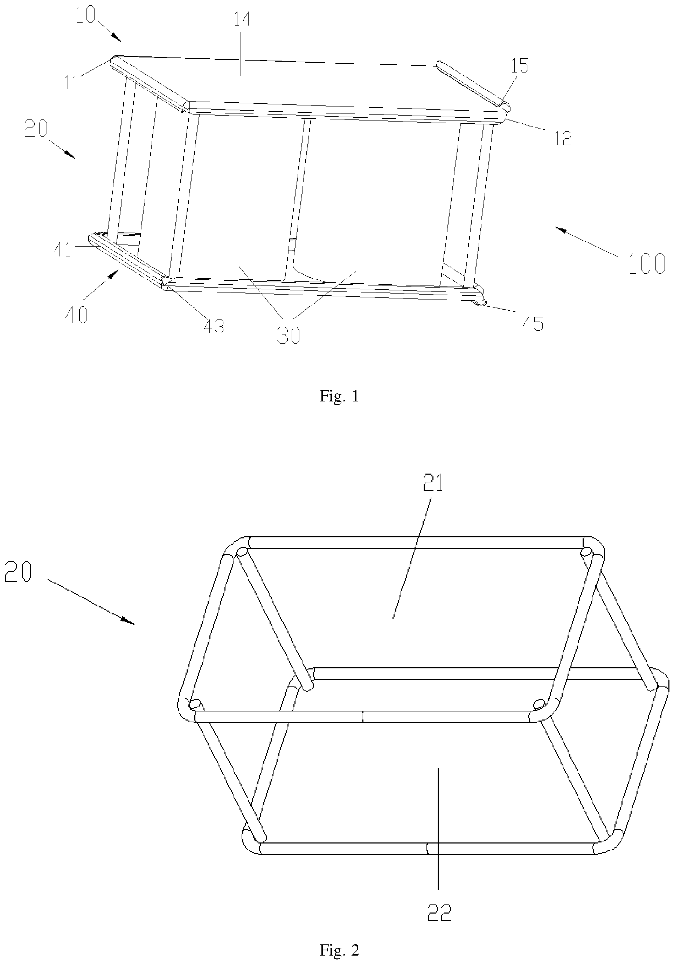

Please refer to Figures 1-5, which show schematic structural diagram of the whole bread baking mold, the frame, the cover plate, the bottom plate, and the container of the bread baking mold.

As shown in Figures 1-2, the bread baking mold **100** of the present disclosure comprising a frame **20,** a cover plate **10** provided at the top of the frame **21,** a bottom plate **40** provided at the bottom of the frame **22,** and at least a container **30** provided in the frame. Wherein the cover plate **10** and the bottom plate **40** can opening and/or closing relative to the frame **20** respectively.

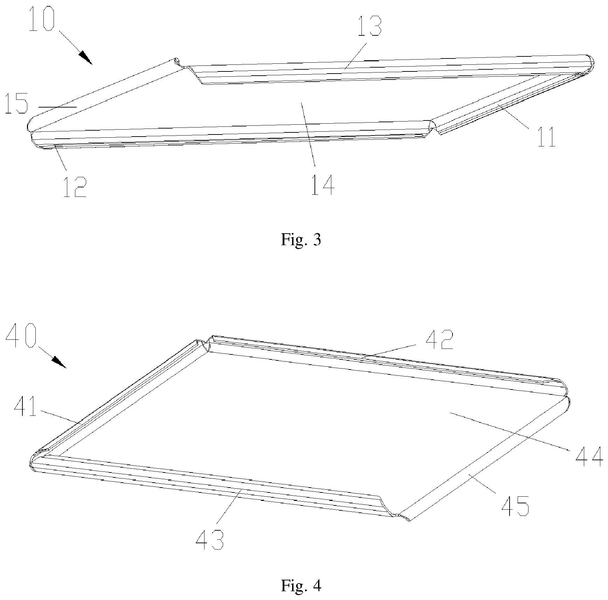

As shown in Figure 3, the cover plate **10** of the present disclosure is rectangular in shape, comprising a first plane **14** with two opposite sides extending inwardly resulting in a first slide groove **12** and a second slide groove **13;** a third side between the two opposite sides extending inwardly resulting in a first shift groove **11;** and a fourth side opposite the third side turning outwardly resulting in a first holding portion **15,** which is easy to push and pull when using.

As shown in Figure 4, the bottom plate **40** of the present disclosure is rectangular in shape, comprising a second plane **44** with two opposite sides extending inwardly resulting in a third slide groove **42** and a fourth slide groove **43;** a third side between the two opposite sides extending inwardly resulting in a second shift groove **41;** and a fourth side opposite the third side turning outwardly resulting in a second holding portion **45,** which is easy to push and pull when using.

Wherein, the cover plate **10** is detachably connected to the frame **20** through the first slide groove **12** and the second slide groove **13;** the bottom plate **40** is detachably connected to the frame **20** through the third slide groove **42** and the fourth slide groove **43;** the first plane **14** has the same area as the top of the frame **21;** the second plane **44** has the same area as the bottom of the frame **22.** The cover plate and the bottom plate are detachable after use. There are no dead corners in the cleaning process, which is helpful to keep clean, to ensure sanitation in use, and to reduce storage space.

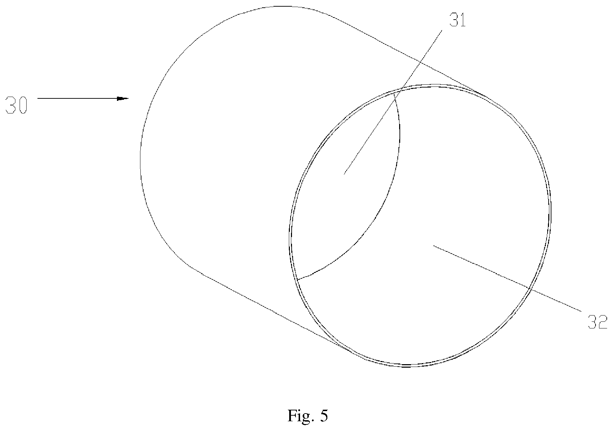

As shown in Figure 5, the height of the container **30** of the present disclosure is the same as the height of the frame **20;** the container is a cylindrical body and is integrally formed with a hollow.

Further, the container **30** has a first opening **31** connected with the cover plate and a second opening **32** connected with the bottom plate. In use, the cover plate and the bottom plate are joined to the first opening 31 and the second opening 32 of the container, so that there is no need to arrange the upper bottom surface and the lower bottom surface additionally when manufacturing the container, thus the raw material is effectively saved. And the hollow arrangement of the container is helpful to perform cleaning after use.

More importantly, if there are many kinds of toast to be produced, the container of any shape can be replaced to obtain the ideal shapes for the consumer. During whole process, it only needs to replace the container, and there is no need to repurchase a whole set of mold. In that way, the cost can be greatly reduced.

At the same time, because the container is easy to replace, people could adjust an appropriate size container according to the amount of raw material, which is helpful to reduce the waste.

The present disclosure has the following prominent technical effects:
(1) When it is necessary to produce toast of various sizes and shapes, for the bread baking mold of the disclosure, it only needs to replace the container, and there is no need to repurchase a whole set of mold, in that way, the cost can be greatly reduced.
(2) The container the bread baking mold of the disclosure is easy to replace, people could adjust an appropriate size container according to the amount of raw material, which is helpful to reduce the waste.
(3) The cover plate and the bottom plate are detachable, after use, there are no dead corners in the cleaning process, which is helpful to keep clean, to ensure sanitation in use, and to reduce storage space.

Obviously, the described embodiments are only a part of, not all of, the embodiments of the present disclosure. All other embodiments obtained by a person of ordinary skill in the art based on the embodiments of the present disclosure without creative effort shall fall into the protection scope of the present disclosure.

## Claims

1. A bread baking mold (100), comprising:
a frame (20);
a cover plate (10) provided at the top of the frame (21);
a bottom plate (40) provided at the bottom of the frame (22); and
at least a container (30) provided in the frame (20);
wherein the cover plate (10) and the bottom plate (40) can opening and/or closing relative to the frame (20) respectively.

2. The bread baking mold according to claim 1, wherein the container (30) can be a polyhedron or a cylinder or an irregular body.

3. The bread baking mold according to claim 2, wherein the container (30) is integrally formed with a hollow.

4. The bread baking mold according to claim 1, wherein the container (30) has a first opening (31) connected with the cover plate (10) and a second opening (32) connected with the bottom plate (40).

5. The bread baking mold according to claim 1, wherein the cover plate (10) and/or a bottom plate (40) removably arranged at the top and/or bottom of the frame.

6. The bread baking mold according to claim 5, wherein the cover plate (10) and the bottom plate (40) can be opening and closing relative to the top of the frame (21) and bottom of the frame (22) slidably.

7. The bread baking mold according to claim 1, wherein the frame (20) can be a polyhedron or a cylinder or an irregular body.

8. The bread baking mold according to claim 7, wherein the frame (20) can be rectangular in shape.

9. The bread baking mold according to claim 8, wherein the cover plate (10) comprising:
a first plane (14) with two opposite sides extending inwardly resulting in a first slide groove (12) and a second slide groove (13);
a third side between the two opposite sides extending inwardly resulting in a first shift groove (13); and
a fourth side opposite the third side turning outwardly resulting in a first holding portion (15).

10. The bread baking mold according to claim 8, wherein the bottom plate (40) comprising:
a second plane (44) with two opposite sides extending inwardly resulting in a third slide groove (42) and a fourth slide groove (43);
a third side between the two opposite sides extending inwardly resulting in a second shift groove (41); and
a fourth side opposite the third side turning outwardly resulting in a second holding portion (45).
